# EUROPEAN PATENT APPLICATION

(11) **EP 1 845 638 A1**
(43) Date of publication of application: **17.10.2007**
(21) Application number: 06702132.9
(22) Date of filing: 05.01.2006
(51) Int. Cl.: H04B 7/26

(54) **RELATIVE VALUE NOTIFYING METHOD, BASE STATION AND MOBILE STATION**

(30) Priority: 05.01.2005 JP 2005000987
(71) Applicant: NTT DoCoMo INC., Chiyoda-ku Tokyo 100-6150 (JP)
(72) Inventor: USUDA, Masafumi Intellectual Property Dept., Chiyoda-ku, Tokyo 100-6150 (JP); UMESH, Anil Intellectual Property Dept., Chiyoda-ku, Tokyo 100-6150 (JP); NAKAMURA, Takehiro Intellectual Property Dept., Chiyoda-ku, Tokyo 100-6150 (JP)
(74) Representative: HOFFMANN EITLE
(86) International application number: PCT/JP2006/300037
(87) International publication number: WO 2006/073157

(57) **Abstract**

A relative value notification method for notifying a relative value of a certain variable, from a transmitting side apparatus to a receiving side apparatus, includes the steps of: generating, at the transmitting side apparatus, a control signal indicating the relative value by using the number of values 1 or 0 in a plurality of bits to be transmitted during a predetermined period, and transmitting the generated control signal to the receiving side apparatus; and increasing/decreasing, at the receiving side apparatus, the certain variable by using the number of values 1 or 0 in the plurality of bits in the control signal received during the predetermined period.

## Description

### [Technical Field]

The present invention relates to a relative value notification method, a base station and a mobile station for notifying a relative value of a certain variable, from a transmitting side apparatus to a receiving side apparatus.

### [Background Art]

Conventionally, in the mobile communication system, the binary number system is used in a case where the relative value of a certain variable is notified from a transmitting side apparatus to a receiving side apparatus in the same way as in the case where the certain variable is notified from a transmitting side apparatus to a receiving side apparatus.

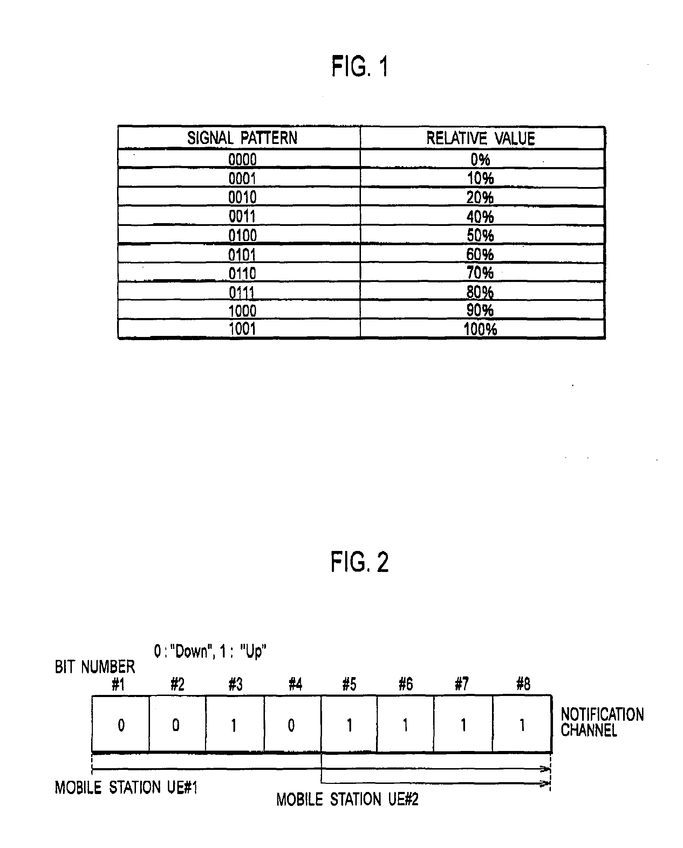

With reference to Fig. 1, description will be given of a method for notifying the relative value of a certain variable from a transmitting side apparatus to a receiving side apparatus with use of the binary number system. In the method, used is a table having a signal pattern and a relative value associated with each other as shown in Fig. 1.

In the method, a transmitting side apparatus is configured: to perform an error correction encoding process on a signal pattern corresponding to a certain relative value; to increase the Euclid distance between each pair of the relative values; and thereby to reduce a rate of error occurrence,

In addition, in the method, by causing a high-order bit to have redundancy, a transmission side apparatus is configured: to decrease the Euclid distance between relative values having close values; and to increase the Euclid distance between relative values having largely different values, substantially.

For example, a Channel Quality Indicator (CQI) is coded by the method mentioned above (see Non-patent Document 1).

The method has an advantage that the rate of error occurrence is low, and that, even if an error occurs, the adverse effect due to the error can be reduced and kept low. However, in the method, in a case where a transmitting side apparatus transmits individual bits for a long period of time, a receiving side apparatus needs to calculate a relative value by receiving and then decoding all the bits, resulting in a problem of taking time to notify the receiving side apparatus of the relative value. In other words, the method has problems such as control delay or a load on an apparatus produced by an error correction decoding process.

In order to solve the problems, there is known a method for controlling a certain variable according to "Up" commands and "Down" commands instead of notifying the relative value of the certain variable to a receiving side apparatus.

In this method, the transmission side apparatus is configured to notify the receiving side apparatus of an "Up" command by transmitting a bit taking a value of "1", and to notify the receiving side apparatus of a "Down" command by transmitting a bit taking a value of "0". In this case, the "Up" command or the "Down" command is updated bit by bit, thereby allowing the receiving side apparatus to follow the "Up" commands or the "Down" commands at high speed.

However, the conventional method for controlling a certain variable according to the "Up" command or the "Down" command has a problem, for example, that the certain variable differs between a receiving side apparatus (a base station or a mobile station) that tracks, from the beginning, a notification channel for notifying the "Up" command or the "Down" command, and a receiving side apparatus that tracks the notification channel from the middle thereof.

In the example of Fig. 2, a mobile station UE#1 increases the value of the certain variable by the amount of value corresponding to two "Up" commands, since the mobile station UE#1 tracks a notification channel from bit#1, On the other hand, a mobile station UE#2 increases the value of the certain variable by the amount of value corresponding to 4 "Up" commands, since the mobile station UE#2 tracks a notification channel from bit#5.

In this manner, the method mentioned above has a problem that the value of the certain variable differs depending on a start time of tracking the notification channel. In other words, there is a problem of difficulty in achieving fairness among receiving side apparatuses.
[Non-patent Document 1] 3GPP TR25.212 v5.8.0

### [Disclosure of the Invention]

Accordingly, in view of the above problems, an object of the present invention is to provide a relative value notification method, a base station and a mobile station, which are capable of achieving fairness among receiving side apparatuses while reducing control delay or a control load.

A first aspect of the present invention is summarized as a relative value notification method for notifying a relative value of a certain variable, from a transmitting side apparatus to a receiving side apparatus, including the steps of: generating, at the transmitting side apparatus, a control signal indicating the relative value by using the number of values 1 or 0 in a plurality of bits to be transmitted during a predetermined period, and transmitting the generated control signal to the receiving side apparatus; and increasing/decreasing, at the receiving side apparatus, the certain variable according to the number of values 1 or 0 in the plurality of bits in the control signal received during the predetermined period.

A second aspect of the present invention is summarized as a relative value notification method for notifying a relative value of a maximum allowable transmission rate, from a base station to a mobile station, including the steps of: measuring, at the base station, an interference level from an uplink signal transmitted by the mobile station; generating, at the base station, a rate control signal indicating the relative value by using the number of values 1 or 0 to be transmitted during a predetermined period, based on the interference level, and transmitting the generated rate control signal to the mobile station; and increasing/decreasing, at the mobile station, the maximum allowable transmission rate according to the number of values 1 or 0 in the plurality of bits in the rate control signal received during the predetermined period.

A third aspect of the present invention is summarized as a base station including: a control signal generator unit configured to generate a control signal indicating a relative value of a certain variable by using the number of values 1 or 0 in a plurality of bits to be transmitted during a predetermined period; and a control, signal transmitter unit configured to transmit the control signal to a mobile station.

A fourth aspect of the present invention is summarized as a mobile station including; a control signal generator unit configured to generate a control signal indicating a relative value of a certain variable by using the number of values 1 or 0 in a plurality of bits to be transmitted during a predetermined period; and a control signal transmitter unit configured to transmit the control signal to a mobile station.

A fifth aspect of the present invention is summarized as a base station including: a control signal receiver unit configured to receive a control signal transmitted from a mobile station; and a certain variable increasing/decreasing unit configured to increase/decrease a certain variable according to the number of values 1 or 0 in a plurality of bits in the control signal received during a predetermined period.

A sixth aspect of the present invention is summarized as a mobile station including; a control signal receiver unit configured to receive a control signal transmitted from a base station; and a certain variable increasing/decreasing unit configured to increase/decrease a certain variable according to the number of values 1 or 0 in a plurality of bits in the control signal received during a predetermined period.

### [Brief Description of the Drawings]

- [Fig. 1]: Fig. 1 is a diagram showing an example of a table used in a relative value notification method in a conventional mobile communication system.
- [Fig. 2]: Fig. 2 is a diagram for explaining a certain variable controlling method in the conventional mobile communication system.
- [Fig. 3]: Fig. 3 is an overall configuration diagram of a mobile communication system according to an embodiment of the present invention.
- [Fig. 4]: Fig. 4 is a functional block diagram of a base station in a mobile communication system according to the embodiment of the present invention.
- [Fig. 5]: Fig. 5 is a functional block diagram of a mobile station in a mobile communication system according to the embodiment of the present invention.
- [Fig. 6]: Fig. 6 is a diagram for explaining a controlling method of a maximum allowable transmission rate of a mobile station in a mobile communication system according to the embodiment of the present invention.
- [Fig. 7A]: Fig. 7A is a flow chart showing an operation in a mobile communication system according to the embodiment of the present invention.
- [Fig. 7B]: Fig. 7B is a flow chart showing an operation in a mobile communication system according to the embodiment of the present invention.

### [Best Mode for Carrying out the Invention]

### (Configuration of a mobile communication system according to an embodiment of the present invention)

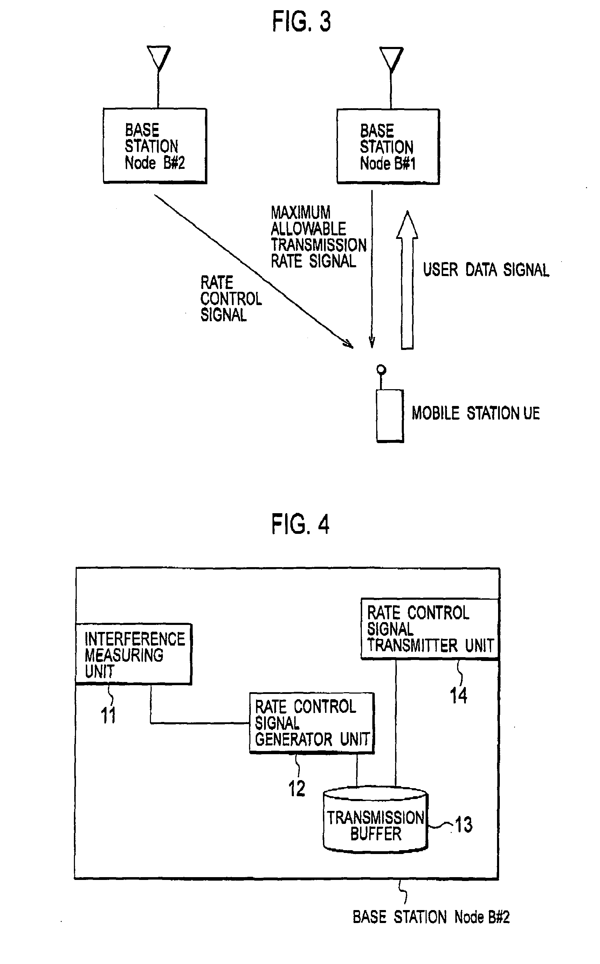

With reference to Fig. 3 to Fig. 6, description will be given of a configuration of a mobile communication system according to an embodiment of the present invention. In the mobile communication system according to the present embodiment, a base station Node B#2 (a transmitting side apparatus) is configured to notify the relative value of a maximum allowable transmission rate signal (a certain variable) to a mobile station UE (a receiving side apparatus).

In the example of Fig. 3, a base station Node B#1 is configured to transmit a maximum allowable transmission rate signal for notifying the mobile station UE of the maximum allowable transmission rate (which includes a parameter for calculating the maximum allowable transmission rate, and hereinafter the same shall apply) of an up signal (a user data signal) to be transmitted by the mobile station UE.

The base station Node B#2 is configured to transmit a rate control signal for instructing a mobile station UE to reduce the maximum allowable transmission rate notified by the base station Node B#1, since the base station Node B#2 receives, as an interference, an uplink signal transmitted from the mobile station UE to the base station Node B#1. Incidentally, the rate control signal is composed so as to notify the relative value of the maximum allowable transmission rate to a mobile station UE.

As shown in Fig. 4, the base station Node B#2 according to the present embodiment includes an interference measuring unit 11, a rate control signal generator unit 12, a transmission buffer 13 and a rate control signal transmitter unit 14.

The interference measuring unit 11 is configured to measure an interference level from the uplink signal transmitted from the mobile station UE.

The rate control signal generator unit 12 is configured to generate a rate control signal (a control signal), based on the interference level measured by the interference measuring unit 11. This rate control signal shows the relative value of the maximum allowable transmission rate (a certain variable) notified from the base station Node B#1 to the mobile station UE, by using the number of 1 or 0 in a plurality of bits to be transmitted during a predetermined time.

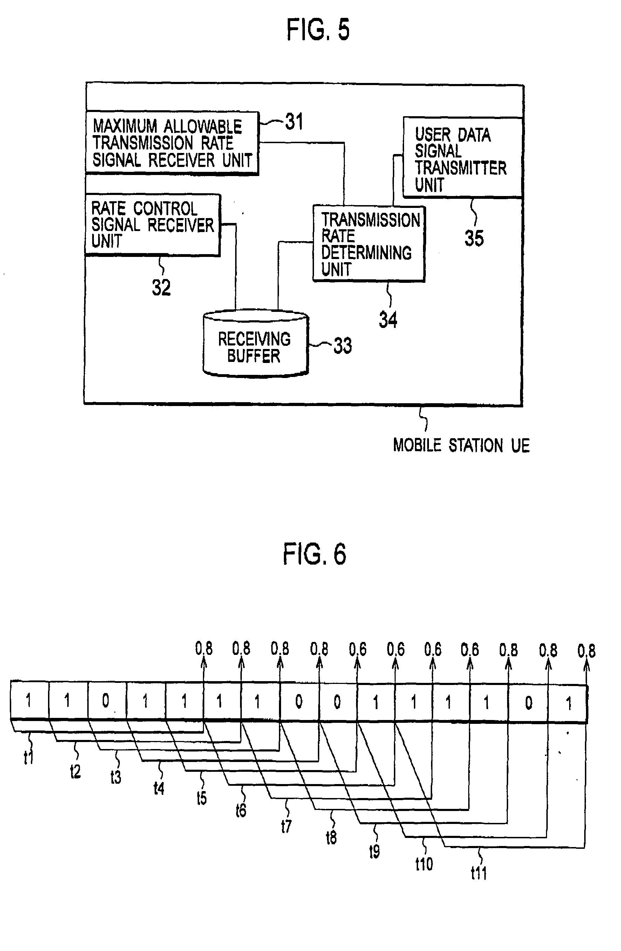

In the example of Fig. 6, the rate control signal generator unit 12 is configured to use last 5 bits to express the relative value of the above-mentioned maximum allowable transmission rate (the certain variable). Here, it is configured that the relative value mentioned above is equivalent to the result of multiplying the number of bits each having a value of "1" in the last 5-bits by "1/5".

To be more precise, the rate control signal generator unit 12 is configured to generate a rate control signal in which the number of values 1 in the last 5-bits is "0", when the relative value "0" is to be notified. The rate control signal generator unit 12 is configured to generate a rate control signal in which the number of values 1 in the last 5-bits is "1", when the relative value "1/5 = 0.2" is to be notified. The rate control signal generator unit 12 is configured to generate a rate control signal in which the number of values 1 in the last 5-bits is "2", when the relative value "2/5 = 0.4" is to be notified. The rate control signal generator unit 12 is configured to generate a rate control signal in which the number of values 1 in the last 5-bits is "3", when the relative value "3/5 = 0.6" is to be notified. The rate control signal generator unit 12 is configured to generate a rate control signal in which the number of values 1 in the last 5-bits is "4", when the relative value "4/5 = 0.8" is to be notified. The rate control signal generator unit 12 is configured to generate a rate control signal in which the number of values 1 in the last 5-bits is "5", when the relative value "5/5 = 1" is to be notified.

More specifically, the rate control signal generator unit 12 is configured to determine the above-mentioned relative value corresponding to the interference level measured by the interference measuring unit 11. The rate control signal generator unit 12 is configured to determine, by referring to the transmission buffer 13, a bit value to be transmitted next, so that the number of values 1 in a plurality of bits to be transmitted during a predetermined time period would correspond to the relative value described above.

For example, when the relative value "4/5 = 0.8" is to be notified, the rate control signal generator unit 12 is configured to determine, by referring to the transmission buffer 13, the bit value to be transmitted next, so that the number of values 1 in the last 5 bits would be "4".

The transmission buffer 13 is configured to temporarily store each bit value in a rate control signal to be transmitted to the mobile station UE, and each bit value in the rate control signal which has been transmitted to the mobile station UE already.

The rate control signal transmitter unit 14 is configured to extract, from the transmission buffer 13, the rate control signal generated by the rate control signal generator unit 12, and to transmit the extracted signal to the mobile station UE.

Note that the rate control signal transmitter unit 14 may be configured to transmit a rate control signal for every one bit, or may be configured to transmit a rate control signal for every plurality of bits.

As shown in Fig. 5, the mobile station UE according to the present embodiment includes a maximum allowable transmission rate signal receiver unit 31, a rate control signal receiver unit 32, a receiving buffer 33, a transmission rate determining unit 34 and a user data signal transmitter unit 35.

The maximum allowable transmission rate signal receiver unit 31 is configured to receive a maximum allowable transmission rate signal transmitted from the base station Node B#1, and to notify the transmission rate determining unit 34 of the maximum allowable transmission rate notified by using the maximum allowable transmission rate signal.

The rate control signal receiver unit 32 is configured to receive a rate control signal transmitted from the base station Node B#2, and to notify the transmission rate determining unit 34 of the relative value of the maximum allowable transmission rate notified by using the rate control signal.

The rate control signal receiver unit 32 is configured to calculate the relative value of the above-mentioned maximum allowable transmission rate by using the number of values 1 or 0 in a plurality of bits in the rate control signal received during a predetermined period.

In the example of Fig. 6, the rate control signal receiver unit 32 judges that the relative value of the above-mentioned maximum allowable transmission rate is "4/5 = 0.8", since the number of values 1 in the last 5 bits is "4" at t1.

Moreover, the rate control signal receiver unit 32 judges that the relative value of the above-mentioned maximum allowable transmission rate is "3/5 = 0.6", since the number of 1 in the last 5 bits is "3" at t5.

The transmission rate determining unit 34 is configured to increase or decrease the maximum transmission rate, by multiplying the maximum allowable transmission rate notified by the maximum allowable transmission rate signal receiver unit 31 by the relative value of the maximum allowable transmission rate notified by the rate control signal receiver unit 32, so as to determine the transmission rate of an uplink signal to be transmitted from the mobile station UE to the base station Node B#1.

The user data signal transmitter unit 35 is configured to transmit a user data signal to the base station Node B#1 at the transmission rate determined by the transmission rate determining unit 34.

### (Operation of a mobile communication system according to an embodiment of the present invention)

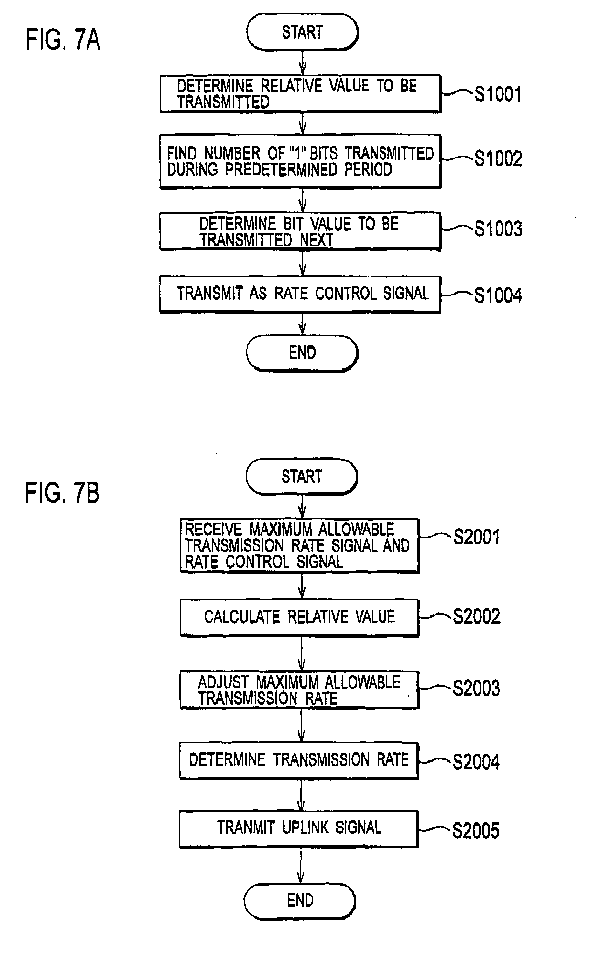

With reference to Fig. 7A and Fig. 7B, description will be given of an operation of the mobile communication system according to the present embodiment.

First, with reference to Fig. 7A, an operation of the base station Node B#2 according to the present embodiment is described.

As shown in Fig. 7A, in step S1001, according to the interference level measured by the interference measuring unit 11, the rate control signal generator unit 12 determines the relative value of the maximum allowable transmission rate to be transmitted.

In step S1002, by referring to the transmission buffer 13, the rate control signal generator unit 12 finds out the number of bits each having the value of "1" or "0" transmitted during a last predetermined period (in the last 4 bits in the example of Fig. 6).

In step S1003, the rate control signal generator unit 12 determines the bit value to be transmitted next by using the determined relative value and the found-out number of bits. Then, the rate control signal generator unit 12 generates a rate control signal including the determined bit value, and stores the generated signal in the transmission buffer 13.

The rate control signal transmitter unit 14 is configured to transmit a rate control signal, which is stored in the transmission buffer 13, to the mobile station UE at a predetermined timing, in step S1004.

Second, with reference to Fig. 7B, an operation of the mobile station UE according to the present embodiment is described.

As shown in Fig. 7B, in step S2001, the maximum allowable transmission rate signal receiver unit 31 receives the maximum allowable transmission rate signal from the base station Node B#1, while the rate control signal receiver unit 32 receives the rate control signal from the base station Node B#2.

In step S2002, the rate control signal receiver unit 32 calculates the relative value of the maximum allowable transmission rate, by using the number of values 1 or 0 (that is, the number of bits each having a value of "1" or "0") in a plurality of bits (the last 5 bits in the example shown in Fig. 6) received during a predetermined period.

In step S2003, the transmission rate determining unit 34 adjusts the maximum allowable transmission rate, by multiplying a maximum allowable transmission rate notified by the maximum allowable transmission rate signal receiver unit 31 and the relative value of the maximum allowable transmission rate calculated by the rate control signal receiver unit 32.

In step S2004, the transmission rate determining unit 34 determines the transmission rate of an uplink signal (a user data signal) according to the adjusted maximum allowable transmission rate. Here, the transmission rate determining unit 34 may determine the transmission data block size in the uplink signal as the transmission rate of the up signal, or determine a transmission power ratio of the control signal to the user data signal.

In step S2005, the user data signal transmitter unit 35 transmits the user data signal to the base station Node B#1 at the determined transmission rate.

### (Effects of the mobile communication system according to the embodiment of the present invention)

According to the mobile communication system of the present embodiment, a mobile station UE (a receiving side apparatus) is configured to calculate a relative value by using the number of bits each having a value of "1" or "0" in a plurality of bits in a rate control signal received during a predetermined period. Accordingly, the maximum allowable transmission rate (the certain variable) can be controlled upon every receipt of 1 bit, thereby reducing control delay or a control load attributable to the fact that the maximum allowable transmission rate is controlled after all the bits of a signal pattern corresponding to the relative value are received and then decoded.

In addition, according to the mobile communication system of the present embodiment, the mobile station UE (the receiving side apparatus) is configured to calculate the relative value by using the number of bits each having a value of "1" or "0" in a plurality of bits in the rate control signal received during the predetermined period. Thereby, the difference in the maximum allowable transmission rate among mobile stations UE (receiving side apparatuses) can be reduced when compared to a case where the maximum allowable transmission rate (the certain variable) is controlled according to the number of "Up" commands or "Down" commands obtained after a start of tracking a communication channel.

### [Industrial Applicability]

As described above, according to the present invention, it is possible to provide a relative value notification method, a base station and a mobile station, which are capable of achieving fairness among receiving side apparatuses while reducing control delay or a control load.

## Claims

1. A relative value notification method for notifying a relative value of a certain variable, from a transmitting side apparatus to a receiving side apparatus, comprising the steps of:
generating, at the transmitting side apparatus, a control signal indicating the relative value by using the number of values 1 or 0 in a plurality of bits to be transmitted during a predetermined period, and transmitting the generated control signal to the receiving side apparatus; and
increasing/decreasing, at the receiving side apparatus, the certain variable by using the number of values 1 or 0 in the plurality of bits in the control signal received during the predetermined period.

2. A relative value notification method for notifying a relative value of a maximum allowable transmission rate, from a base station to a mobile station, comprising the steps of:
measuring, at the base station, an interference level from an uplink signal transmitted by the mobile station;
generating, at the base station, a rate control signal indicating the relative value by using the number of values 1 or 0 to be transmitted during a predetermined period, based on the interference level, and transmitting the generated rate control signal to the mobile station; and
increasing/decreasing, at the mobile station, the maximum allowable transmission rate according to the number of values 1 or 0 in the plurality of bits in the rate control signal received during the predetermined period.

3. A base station comprising:
a control signal generator unit configured to generate a control signal indicating a relative value of a certain variable by using the number of values 1 or 0 in a plurality of bits to be transmitted during a predetermined period; and
a control signal transmitter unit configured to transmit the control signal to a mobile station.

4. A mobile station comprising:
a control signal generator unit configured to generate a control signal indicating a relative value of a certain variable by using the number of values 1 or 0 in a plurality of bits to be transmitted during a predetermined period; and
a control signal transmitter unit configured to transmit the control signal to a mobile station.

5. A base station comprising:
a control signal receiver unit configured to receive a control signal transmitted from a mobile station; and
a certain variable increasing/decreasing unit configured to increase/decrease a certain variable according to the number of values 1 or 0 in a plurality of bits in the control signal received during a predetermined period.

6. A mobile station comprising:
a control signal receiver unit configured to receive a control signal transmitted from a base station; and
a certain variable increasing/decreasing unit configured to increase/decrease a certain variable according to the number of values 1 or 0 in a plurality of bits in the control signal received during a predetermined period.
